Europäisches Patentamt

European Patent Office

Office européen des brevets

(11) Veröffentlichungsnummer: **0 282 821 B1**

# (12) EUROPÄISCHE PATENTSCHRIFT

(45) Veröffentlichungstag der Patentschrift: **16.09.92**

(21) Anmeldenummer: **88103211.4**

(22) Anmeldetag: **02.03.88**

(51) Int. Cl.⁵: **G01N 30/10**

(54) **Einrichtung zur Strömungsteilung bei der gaschromatographischen Analyse.**

(30) Priorität: **16.03.87 DE 3708504**

(43) Veröffentlichungstag der Anmeldung:
**21.09.88 Patentblatt 88/38**

(45) Bekanntmachung des Hinweises auf die
Patenterteilung:
**16.09.92 Patentblatt 92/38**

(84) Benannte Vertragsstaaten:
**DE FR GB**

(56) Entgegenhaltungen:
**DE-A- 2 334 624**
**DE-B- 1 181 449**
**DE-B- 1 673 068**
**US-A- 4 035 168**

(73) Patentinhaber: **SIEMENS AKTIENGESELL-
SCHAFT**
**Wittelsbacherplatz 2**
**W-8000 München 2(DE)**

(72) Erfinder: **Kraft-Ulrich, Arnold, Dipl.-Ing.**
**Wattkopfstrasse 40a**
**W-7500 Karlsruhe(DE)**
Erfinder: **Fernand, Clauss**
**Rue du Cimetière 3**
**F-67930 Beinheim(FR)**

# Beschreibung

Die Erfindung betrifft eine Einrichtung zur Strömungsteilung bei der gaschromatographischen Analyse, die zwischen eine Dosier- und/oder Verdampfungsvorrichtung mit Trägergasquelle und eine Trennsäule geschaltet ist.

Bei der Analyse von Flüssigkeiten oder Gasen mit Methoden der Gaschromatographie werden Probenmengen in bekannter Weise (siehe z.B. DE-A-2 334 624, DE-B-1 673 068 und US-A-4 035 168) dosiert und mittels eines Trägergasstromes in die Trennsäule gefördert.

Einesteils ist es mit bei Gaschromatographen vertretbarem Aufwand nicht möglich, weniger als 0,5 μl Probenflüssigkeit in den Verdampfer zu dosieren, andererseits ist bei den meistverwendeten Kapillartrennsäulen eine um zwei dezimale Größenordnungen kleinere Menge notwendig, um eine gute Trennleistung zu erreichen.

Es wird deshalb zwischen Dosiereinrichtung und Säulenkopf ein Strömungsteiler, ein sogenannter Split, eingeschaltet, der das gasförmige Trägergas/Probengemisch in einem einstellbaren Verhältnis aufteilt.

Ein derartiger Strömungsteiler oder Split weist einen Splitraum mit Auslaß und jeweils einen Anschluß an die Dosiereinrichtung und Trennsäule auf.

Das Teilungsverhältnis wird durch die Strömungswiderstände von Trennsäule und Splitausgangsdrossel bestimmt.

Besonders bei Analysen polarer und/oder hochsiedender Substanzen mit Kapillarsäulen tritt Tailing von Hauptkomponenten auf, dessen Ursache im wesentlichen auf Wandabsorption im Splitraum zurückzuführen ist.

Es besteht demgemäß die Aufgabe, den bekannten Strömungsteiler so zu verbessern, daß der Einfluß der Tailing verursachenden Wandabsorptionen weitgehend verhindert wird.

Die Aufgabe ist mit einer Einrichtung zur Strömungsteilung lösbar, welche die Merkmale des Anspruchs 1 aufweist.

Mit der Kaskadenschaltung von zwei Strömungsteilern wird die Gesamtteilung eingestellt. Über den zusätzlichen Trägergasanschluß am zweiten Strömungsteiler läßt sich nach Aufgabe der Probe auf die Trennsäule und deren Förderung durch dieselbe die Transferleitung rückspülen, so daß die an der Wand absorbierten Probenkomponenten entfernt werden. Mit dem Rückspülzeitpunkt wird die Dosierung auf die Trennsäule exakt beendet und damit ein Dosiertailing unterbunden. Außerdem ist eine vorteilhafte Trennung des Dosiersystems von dem Trennsäulensystem zwischen zwei Dosierungen möglich.

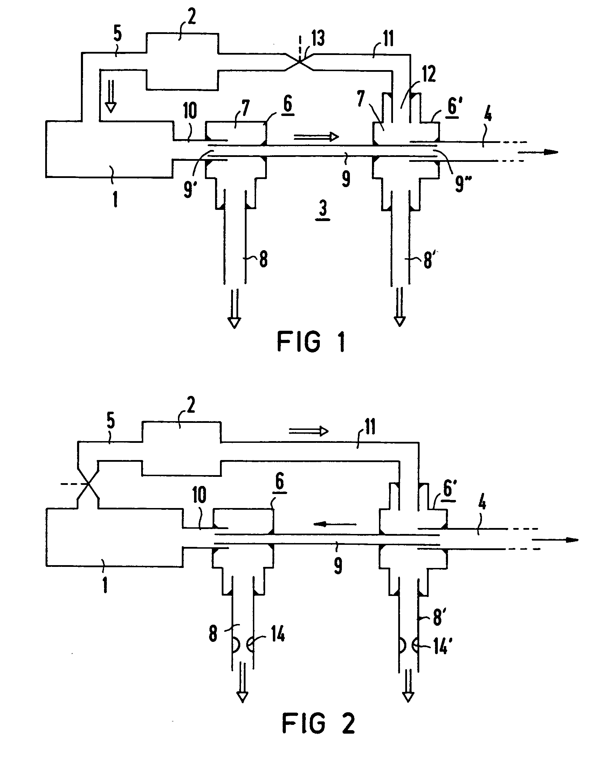

Zur Erläuterung der Erfindung ist in den Figuren 1 und 2 ein Ausführungsbeispiel in zwei Funktionszuständen stark schematisiert dargestellt und im folgenden beschrieben.

In der Dosier- und Verdampfungsvorrichtung 1 wird eine flüssige Probe der Größenordnung von μl eingebracht, verdampft und mittels eines aus der Trägergasquelle 2 über die Leitung 5 zugeführten Trägergasstroms über die Einrichtung 3 zur Strömungsteilung in die Trennsäule 4 überführt.

Die Einrichtung 3 zur Strömungsteilung weist zwei in Reihe geschaltete Strömungsteiler 6 und 6′ auf.

Die Strömungsteiler bestehen im wesentlichen aus einem Splitraum 7 mit einem Auslaß 8 bzw. 8′, die über die Drosselstellen 14 und 14′ in die Atmosphäre münden. Eine den Strömungsteilern 6 und 6′ gemeinsame Transferleitung 9 in Form einer Kapillare ragt mit ihrem einen Ende 9′ in ein die Dosier- und Verdampfungsvorrichtung 1 und den Strömungsteiler 6 verbindendes Anschlußrohr 10 mit dem Ende 9″ in die Trennsäule hinein.

Die Trägergasquelle 2 ist über eine zweite Leitung 11 mit einem in den Splitraum 7 des zweiten Strömungsteilers 6′ mündenden Anschluß 12 verbunden, diese Leitung 11 ist während des geschilderten Dosiervorgangs mit Hilfe eines Abschaltmittels 13 unterbrochen.

Nach Beendigung der Dosierung und der Überführung der Probe in die Trennsäule 4 wird, wie in Figur 2 dargestellt, die Leitung 11 geöffnet und der Trägergasfluß durch die Leitungen 5 unterbrochen, so daß ein Trägergasstrom aus der Trägergasquelle 2 in den zweiten Strömungsteiler 6′ eintritt. Dort erfolgt eine Verzweigung des Trägergasstroms, indem ein Teil durch die Trennsäule 4 geführt wird und die Probe eluiert, ein weiterer Teilstrom dient zur Rückspülung der Transferleitung 9, so daß Reste von Probenkomponenten in der Strömungsteilereinrichtung entfernt werden, bevor die nächste Dosierung erfolgt.

## Patentansprüche

1. Einrichtung zur Strömungsteilung bei der gaschromatographischen Analyse, die zwischen Dosier- und/oder Verdampfungsvorrichtung (1) mit Trägergasquelle (2) und Trennsäule (4) geschaltet ist,
   **gekennzeichnet durch**
   - die Reihenschaltung zweier Strömungsteiler (6, 6′), die jeweils bestehen aus einer einen Splitraum (7) mit Auslaß (8, 8′)
   durchziehenden, beiden gemeinsamen Transferleitung (9), die jeweils einen Ringspalt als Drosselstelle bildend einerseits in die an den ersten Strömungsteiler (6) angeschlossene Dosiervorrichtung (1), andererseits in die an den zweiten Strömungsteiler (6') angeschlossenen Trennsäule (4) ragt,
- einen schaltbaren Anschluß (13) der Trägergasquelle (2) an den Splitraum (7) des zweiten Strömungsteilers (6'),
- ein Abschaltmittel in der Trägergaszuleitung (5) zu der Dosiervorrichtung (1).

## Claims

1. Apparatus for flow division in gas chromatographic analysis, which is connected between dosing and/or vaporization apparatus (1) with carrier-gas source (2) and separating column (4),
characterized by
- the series connection of two flow dividers (6, 6'), which consist respectively of a transfer duct (9), common to both of them and passing through a splitting chamber (7) with outlet (8, 8'), which transfer duct, on the one hand projects into the dosing apparatus (1) connected to the first flow divider (6), and on the other hand into the separating column (4) connected to the second flow divider (6'), in each case forming an annular gap as restrictor,
- a switchable connection (13) of the carrier-gas source (2) to the splitting chamber (7) of the second flow divider (6'),
- disconnection means in the carrier-gas supply duct (5) to the dosing apparatus (1).

## Revendications

1. Dispositif diviseur d'un écoulement dans le cadre de l'analyse par chromatographie en phase gazeuse, qui est relié entre le dispositif de dosage et/ou d'évaporation (1) avec la source de gaz véhicule (2) et la colonne de séparation (4),
caractérisé par :
- le montage série de deux diviseurs d'écoulement (6, 6'), constitués chacun d'un conduit de transfert (9) commun aux deux diviseurs, ledit conduit pénétrant, d'une part, en formant une fente annulaire servant de point d'étranglement, dans le dispositif de dosage (1) relié au premier diviseur d'écoulement (6) et, d'autre part, dans la colonne de séparation (4) reliée au second diviseur d'écoulement (6'), et traversant une chambre de division (7) à sortie (8, 8'),

- un raccord (13) commutable de la source de gaz véhicule (2) avec la chambre de division (7) du second diviseur d'écoulement (6'),
- un moyen d'arrêt dans le conduit (5) d'amenée du gaz véhicule au dispositif de dosage (1).

FIG 1

FIG 2